# EUROPEAN PATENT SPECIFICATION

(11) **EP 1 220 467 B1**
(45) Date of publication and mention of the grant of the patent: **09.10.2002**
(21) Application number: 01307289.7
(22) Date of filing: 28.08.2001
(51) Int. Cl.: H04B 1/74, H04L 1/22, H04L 12/28

(54) **Reliability enhancement for cable modem service**
Zuverlässigkeitsverbesserung eines Kabelmodemdienstes
Amélioration de la fiabilité d'un service de modem pour câble

(30) Priority: 26.12.2000 US 748427
(43) Date of publication of application: 03.07.2002
(73) Proprietor: LUCENT TECHNOLOGIES INC., Murray Hill, New Jersey 07974-0636 (US)
(72) Inventor: Burroughs, Robert Sidney, Doylestown, Pennsylvania 18901 (US); Rowe, William J., Middletown, New Jersey 07748 (US)
(74) Representative: Watts, Christopher Malcolm Kelway, Dr.

(56) References cited:
- WO-A-97/37493
- US-A- 5 956 384

## Description

### Technical Field

This invention relates to the art of cable modem systems, and more particularly, to the reliability of cable modem systems in the face of a failure in the cable modem terminating system.

### Background of the Invention

Conventional cable modem systems use any of the conventional 6 MHz bandwidth television channels for downstream communications, i.e., from the cable modem terminating system (CMTS) at the cable head end to the cable modems that are typically in homes or businesses. Such television channels are at relatively high frequencies, e.g., 60 MHz and higher. For the upstream communication, i.e., from the cable modems to the cable modem terminating system, narrow channels at relatively low frequencies, e.g., 5-42 MHz, are employed.

The interface between the cable modem and the cable modem terminating system is defined by the Data-Over-Cable Service Interface Specifications (DOCSIS) Radio Frequency Interface (SP-RFIv1.1). This definition specifies how the cable modem determines that it is receiving a valid downstream channel from the cable modem termination system and what steps to take if that channel becomes invalid, e.g., regularly expected messages are not received over the channel. If the cable modem determines that the downstream channel has become invalid, it must reinitialize communication with the CMTS. Unfortunately, the initialization procedure can take tens of minutes when there is a large number of cable modems that are served by the same CMTS that have likewise had their downstream channel become invalid, e.g., due to failure of the CMTS.

One prior art approach to deal with the problem of the downstream channel becoming invalid while preventing those cable modems that have their downstream service via that channel from having to reinitialize is to include in the cable headend a standby CMTS and a switching mechanism which are arranged so that the switching mechanism is between the two CMTS modules and the cable plant. During normal operation, the switch is set to a first position so that the primary CMTS is coupled to the cable. If a failure of the primary CMTS is detected, the switch is set to a second position so as to couple the downstream channel transmitted by the standby CMTS to the cable in lieu of that from the primary CMTS.

According to DOCSIS, one of the messages that must regularly be received by the cable modem to indicate that the downstream is valid is the sync message, which should be received every 200 ms, although it is permitted that a gap of 600 ms be experienced without the downstream channel being declared invalid. However, once 600 ms passes without the receipt of such a message, the downstream channel is determined to be invalid and a modem that is not receiving a valid downstream channel may not use any upstream channels. Thus, in such a case, there is at most a 600 ms window for the prior art system to detect the invalidity of the downstream channel from the primary CMTS and set the switch to the position of the standby CMTS. This is a very demanding requirement.

Furthermore, significant drawbacks of the RF switch approach include: a) the RF switch mechanism or its activation control can fail to operate, b) the mechanism for detecting that a CMTS has failed can itself fail, c) during normal operation the RF switch lies idle and takes up space in the head end as an unproductive expense, d) an external RF switch requires complex cabling from the CMTS to the switch to RF Network, and e) during normal operation the standby CMTS takes up space and lies idle as an unproductive expense.

### Summary of the Invention

In accordance with the principles of the invention, cable modems and at least two CMTS modules, each of which is connected to a single cable so as to provide cable modem service to a respective set of the cable modems, are arranged so that at least one of the CMTSs can act as a backup for the other. To this end, each of the CMTSs simultaneously broadcasts its downstream channel on its own assigned one of the cable channels that is accessible by the cable modems for which it is assigned to provide the primary downstream channel, and each cable modem is assigned in addition to its primary downstream channel at least one alternative downstream channel which is supplied by a CMTS connected to the cable but is different than its primary CMTS so that when the primary downstream channel of a cable modem becomes invalid the cable modem is able to switch to the alternative downstream channel provided by the other CMTS which acts as backup rather than reinitializing itself using the primary downstream channel as in the prior art. In accordance with an aspect of the invention, when switching to the alternative downstream channel the cable modem retains and reemploys almost all of the same parameters that were established during the initialization it performed with the primary CMTS, e.g., the Internet Protocol (IP) address, transmit power levels, the configuration file, and the like.

Since upstream channel descriptors, each of which specifies a channel and the modulation scheme employed thereon that a CMTS is using for upstream communications, are transmitted regularly and often in any downstream channel, a cable modem is able to quickly learn at least one channel and modulation scheme to initially employ for upstream communication after tuning to its alternative downstream channel. Optionally, the upstream channel selected may be a function of a stored alternative upstream channel identifier, if any. Thus, the switch by the cable modem can be made within a time frame which is on the order of a second.

Switching is facilitated because, in accordance with an aspect of the invention, the alternative-channel-providing CMTS is able to obtain the initialization-established parameters from an external source. Thus, in one embodiment of the invention, the alternative-channel-providing CMTS has been supplied with sufficient information from the primary CMTS to immediately communicate successfully with the cable modems that have now switched to the alternative channel. In another embodiment of the invention, the cable modem itself supplies the parameters to the alternative-channel-providing CMTS after detecting that the downstream channel from the primary CMTS has become invalid.

Advantageously, very little cost is added to provide the redundancy because current cable modems are already able to switch from one downstream channel to another, e.g., in response to a command communicated as part of a Downstream Channel Change message. Essentially all that is required in the cable modems is a software update, so that the cable modem can become aware of the alternative channel and so that it knows to switch to the alternative channel rather than reinitialize on the primary downstream channel. Furthermore, although the alternative-channel-providing CMTS can be configured as a non-operational standby, advantageously, it may be used to support various modems connected along the same cable which employ the alternative channel as their primary channel. The actual loading of any particular channel will be determined based on traffic engineering considerations. Note that not all the cable modems served by a particular CMTS need be assigned the same alternative downstream channel, which can facilitate loading of the CMTS in the face of a failure. Still further advantageously, due to its reduced complexity with respect to the prior art systems, the inventive arrangement is much more likely to meet reliability goals than such prior art systems.

### Brief Description of the Drawing

In the drawing:
FIG. 1 shows an exemplary cable network arranged in accordance with the principles of the invention; and
FIG. 2 shows an exemplary process in flow chart form for establishing cable modem service for a cable modem on specified alternate downstream and upstream channels in the event of the failure of the primary downstream channel, in accordance with the principles of the invention;
FIG. 3 shows an exemplary cable modem arranged in accordance with the principles of the invention; and
FIG. 4 shows exemplary CMTS 400 arranged in accordance with the principles of the invention.

### Detailed Description

The following merely illustrates the principles of the invention. It will thus be appreciated that those skilled in the art will be able to devise various arrangements which, although not explicitly described or shown herein, embody the principles of the invention and are included within its scope as defined by the appended claims. Furthermore, all examples and conditional language recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that any block diagrams herein represent conceptual views of illustrative circuitry embodying the principles of the invention. Similarly, it will be appreciated that any flow charts, flow diagrams, state transition diagrams, pseudocode, and the like represent various processes which may be substantially represented in computer readable medium and so executed by a computer or processor, whether or not such computer or processor is explicitly shown.

The functions of the various elements shown in the FIGs., including functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read-only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

In the claims hereof any element expressed as a means for performing a specified function is intended to encompass any way of performing that function including, for example, a) a combination of circuit elements which performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. Applicant thus regards any means which can provide those functionalities as equivalent as those shown herein.

Unless otherwise explicitly specified herein, the drawings are not drawn to scale.

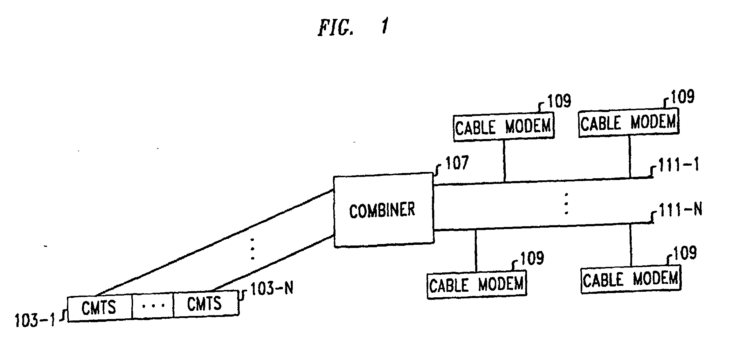

FIG. 1 shows an exemplary cable network arranged in accordance with the principles of the invention. Shown in FIG. 1 a) cable modem terminating system 103, including modules 103-1 through 103-N, b) combiner 107, c) cable modems 109, and d) cable distribution plants 111, including cable distribution plants 111-1 through 111-N.

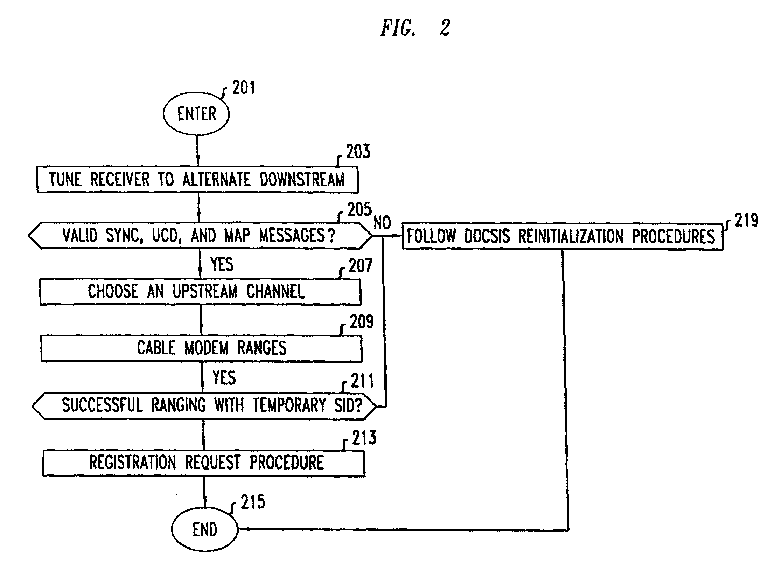

FIG. 2 shows an exemplary process in flow chart form for establishing cable modem service for a cable modem or specified alternate downstream and upstream channels in the event of a failure of the primary downstream channel, in accordance with the principles of the invention.

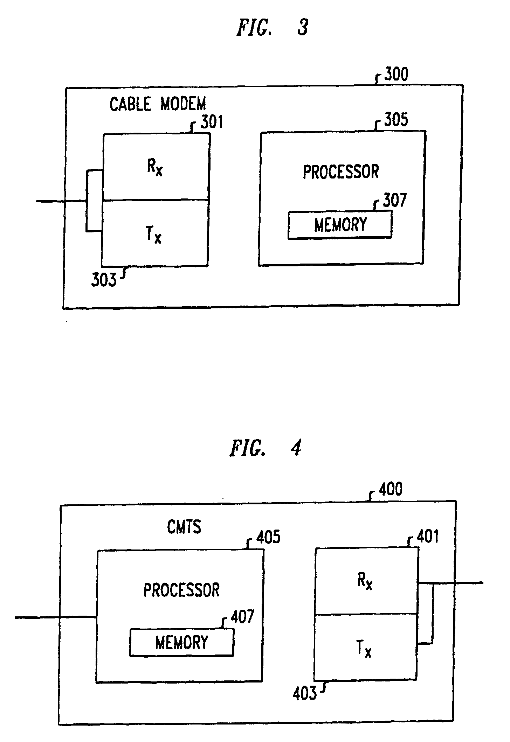

FIG. 3 shows exemplary cable modem 300 arranged in accordance with the principles of the invention.

FIG.4 shows exemplary CMTS 400 arranged in accordance with the principles of the invention.

As is well known in the art, a cable modem terminating system is a system that enables data to be bi-directionally communicated via cable networks. Such systems, which are located in the cable network head end, receive data destined for various cable modems, e.g., cable modems 109, that are downstream from the cable modem terminating system and place the data into a format and modulation that can be received by the cable modems. The cable modem terminating system also receives data from the various cable modems, demodulates the data and transmits it, typically as internet protocol (IP), on its way to its destination, most often a location on the Internet. A single cable modem terminating system often serves many cable modems, which may be located on different cable distribution plants, e.g., cable distribution plant 111-1 through 111-N.

Cable networks often employ the data over cable system interface specification (DOCSIS) as the protocol for data communication between the cable modems and the cable modem terminating system module. The version of DOCSIS most prevalently employed at present is DOCSIS 1.0, with systems that support DOCSIS 1.1 expected to be released in the near future. DOCSIS includes commands which the cable modem terminating system module employs to instruct the cable modems as to which channel to use for upstream communication.

Each of cable modem terminating systems 103 is similar to a conventional cable modem terminating system, in that it enables data to be transmitted via cable networks, e.g., using DOCSIS or another similar type protocol. Each of cable modem terminating systems 103 communicates with at least one cable distribution plant. Note that in some embodiments of the invention, each of cable modem terminating systems 103 may be made up of two or more modules each of which communicates with at least one cable distribution plant. Such modules may share some control functions, e.g., a supervisor card, or they may not share any functionality, depending on the arrangement selected by the implementer. For purposes of the invention, a module in combination with its relevant control functions is considered to be a CMTS in and of itself.

In accordance with an aspect of the invention, in one embodiment of the invention, each cable modem terminating system 103 includes at least one communications port by which it may communicate with another of cable modem terminating system 103. In such an embodiment of the invention, at least a first of cable modem terminating systems 103 supplies at least one parameter that was established during the initialization for each of its cable modems, e.g., a configuration file, a security association, DOCSIS version, concatenation support, payload header suppression, and multicasting support, to a second one of cable modem terminating systems 103.

Combiner 107 allows the downstream signal from two or more cable modem terminating systems 103 to be coupled together onto a single cable. The data in each downstream channel will not be corrupted by the other provided that each respective downstream and each respective upstream channel is carried on its own frequency.

Cable modems 109 are frequency agile, i.e., they can change the frequency of the channel they are using for the upstream communication, e.g., in response to a command or information supplied by the cable modem terminating system to which they are connected. Cable modems 109 can also change the downstream frequency to which they tune.

Furthermore, in accordance with the principles of the invention, in addition to its primary downstream channel, each cable modem is assigned at least one alternative downstream channel and, optionally, an alternative upstream channel identifier. If the primary downstream channel of a cable modem is detected by the cable modem to have become invalid, the cable modem can switch to an alternative downstream channel which is provided by another one of cable modem terminating systems 103 of rather than reinitializing itself using the primary downstream channel as in the prior art. In accordance with an aspect of the invention, when switching to the alternative downstream channel, the cable modem retains and reemploys almost all of the same parameters that were established during the initialization it performed with its primary cable modem terminating system 103. Since upstream channel descriptors, each of which specifies a channel and the modulation scheme employed thereon that a CMTS is using for upstream communications, are transmitted regularly and often in any downstream channel, the cable modem is able to quickly learn at least one channel and modulation scheme to initially employ for upstream communication. Optionally, the upstream channel selected may be a function of the stored alternative upstream channel identifier, if any.

In accordance with an aspect of the invention, cable modems 109 may transmit to the alternative-downstream transmitting channel CMTS one or more parameters, e.g., a configuration file, a security association, DOCSIS version, concatenation support, payload header suppression, and multicasting support, needed by that CMTS to establish communications with the cable modem without requiring reinitialization of the cable modem.

Each of cable distribution plants 111 is a distribution system for a) television service, b) data service, e.g., Internet, and c) other services, e.g., telephone, security and other monitoring. Typically cable distribution plants 111 are hybrid fiber-coax (HFC) links, although all coax or all fiber is also possible.

FIG. 2 shows an exemplary process in flow chart form for establishing cable modem service for a cable modem on specified alternate downstream and upstream channels in the event of a failure of the primary downstream channel, in accordance with the principles of the invention. Such failures typically occur due to a failure of the CMTS providing cable modem service over the primary downstream channel. Prior to entering the process the cable modem is provided with information identifying a) both its alternative downstream channel and b) its upstream channel identifier, which indicates which, of all the upstream channels being used by the CMTS, is the one the cable modem should use. These pieces of information are included in the configuration file which is supplied through the CMTS to the cable modem during its initialization.

The process is entered in step 201 when the cable modem determines that the primary downstream channel is not valid. A determination that the primary downstream channel has become invalid may be made upon detecting a) loss of sync message for more than 600 ms, b) that an upstream channel descriptor has not been received within a time-out period, c) that a response to a range request has not been received after a specified number of attempts, d) that a response to a registration request has not been received after a specified number of attempts, or e) any other condition of invalidation specified by DOCSIS or similar cable modem specification. Next, in step 203, the cable modem tunes its receiver tuner to the alternate downstream channel.

Thereafter, conditional branch point 205 tests to determine if the alternate channel is valid to the extent that it can so detect a valid channel, i.e., if it is receiving within their expected intervals a) sync, b) upstream channel descriptor (UCD), and c) upstream allocation map (MAP) messages. If the test result in step 205 is YES, indicating that the alternate channel appears to be valid, control passes to step 207, in which the cable modem chooses an upstream channel that is being received by the alternate CMTS, i.e., one to which the alternate CMTS is tuned. The particular upstream channel chosen is based on upstream channel identifier that was in the original configuration file and the upstream channel descriptors received on the alternate downstream channel.

Once an upstream channel is chosen, the cable modem ranges, i.e., it sends a message to the alternate CMTS at the same power level that it was using to communicate with the primary CMTS, in step 209. The ranging is performed using an initialization service identifier (SID) which is used until the CMTS assigns the cable modem a permanent unique service identifier. The CMTS returns a ranging response, which is expected to indicate that the power level is acceptable, since the distance between the cable modem and the primary CMTS is substantially the same as the distance between the cable modem and the alternate CMTS.

Note that after that, the alternate CMTS may engage inconventional cable modem power control. To this end, in the event no response is received by the cable modem from the alternate CMTS, the cable modem will increase its power until a response is received.

Conditional branch point 211 next tests to determine if the ranging was successful. The ranging process is declared to be not successful when no response is received by the cable modem from the alternate CMTS after it used its maximum power to transmit to the alternate CMTS. If the test result in step 211 is YES, indicating that the cable modem successfully ranged, control passes to step 213 in which the cable modem engages in the registration request procedure. Note that, in accordance with an aspect of the invention, a new configuration file is not downloaded from the alternate CMTS. Instead, in accordance with an aspect of the invention, the cable modem continues to use the configuration file that was download to it via the primary CMTS.

It should be appreciated that in conventional DOCSIS-based systems the configuration file is supplied by a trivial file transfer protocol (TFTP) server coupled to the CMTS and passes through the CMTS without any information being extracted therefrom by the CMTS. Instead, the information required by the CMTS from the configuration file is the transmitted from the cable modem to the CMTS as part of a registration request message. Note that not all of the parameters that are in the configuration file are supplied in the registration request message, as those that are not supplied are required for other purposes but not for communication between the CMTS and the cable modem.

In order for the registration request procedure to complete successfully, the CMTS must have those parameters of the configuration file that are ordinarily supplied by the cable modem at the time of initialization. To this end, in one embodiment of the invention, the cable modem transfers the necessary parameters to the alternate CMTS. In another embodiment of the invention, which should have very fast reconnection performance, the primary CMTS is arranged to transfer the necessary parameters to the alternate CMTS at an earlier time than the failure. This may be achieved by any form of communication, including shared memory, broadcasting by the primary CMTS on an upstream channel of the alternate CMTS, or having the information echoed by a cable modem.

The process then exits in step 215, as the connection has been successfully reestablished. At this point data transfer may begin. Alternatively, the cable modem may perform dynamic service additions to set up service flows to specify quality of service levels that previously existed on the primary downstream channel.

If the test result in steps 205 or 211 is NO, control passes to step 219 to perform conventional DOCSIS reinitialization procedure. The process then exits in step 215.

In another embodiment of the invention, the cable modem may initialize, e.g., register and range with both the primary and alternate CMTSs as part of the initialization of the cable modem. For example, the cable modem could initialize first with the primary CMTS and then, e.g., either before it begins service or as soon as possible after service begins, initialize with the alternate CMTS. The cable modem could then maintain separate respective range settings, e.g., power levels, for the primary and alternate CMTSs. Advantageously, the cable modem could begin service after the primary downstream channel was detected to be invalid almost immediately after syncing with the downstream channel because there would be no need to range and register first.

In such an embodiment of the invention, the alternate CMTS would recognize that the cable modem was registering and ranging with it only for purposes of backup in the event of a failure of the cable modem's primary downstream channel. To this end, the alternate CMTS would not expect the cable modem to respond to it after the initialization process was complete until the cable modem indicated to the alternate CMTS that it required service from the alternate CMTS.

FIG. 3 shows exemplary cable modem 300 arranged in accordance with the principles of the invention. Cable modem 300 could be used as one of cable modems 109 (FIG. 1). Cable modem 300 includes receiver 301, transmitter 303 and processor 305. Receiver 301 and transmitter 303 are each tunable to different frequencies in the manner of conventional cable modem transmitters and receivers. The particular frequency to which receiver and 301 and transmitter 303 tune is specified by processor 305, which does specifies such frequencies in accordance with the principles of the invention. The information received by receiver 301 from the cable is transferred to receiver 301. Similarly, the information transmitted over the cable from cable modem 300 is supplied by processor 305.

Processor 305 controls the operation of cable modem 300 so that it behaves in accordance with the principles of the invention. For example, processor 300 may cause cable modem 300 to perform the steps of a cable modem in accordance with the method described herein in conjunction with FIG. 2. Processor 305 includes memory 307 which stores various information to support the operation of cable modem 300. In accordance with an aspect of the invention, memory 307 stores various parameters that are required for communication with a first CMTS, such as those that are established during initialization, and such parameters may be supplied from memory 307 for use by a second CMTS in the event that the downstream channel with the first CMTS becomes invalid. Although memory 307 is shown as being internal to processor 305, it may be external thereto as well in other embodiments of the invention.

FIG. 4 shows exemplary CMTS 400 arranged in accordance with the principles of the invention. CMTS 400 could be used as one of CMTS 103 (FIG. 1). CMTS 400 includes receiver 401, transmitter 403 and processor 405. Receiver 401 and transmitter 403 are each tunable to different frequencies in the manner of conventional CMTS transmitters and receivers. The particular frequency to which receiver 401 and transmitter 403 tune is specified by processor 405, which does specifies such frequencies in accordance with the principles of the invention. The information received by receiver 401 from the cable is transferred to receiver 401. Similarly, the information transmitted over the cable from CMTS 400 is supplied by processor 405. CMTS 400 may also be coupled to another CMTS so as to transfer thereto, or receive therefrom, initialization information regarding cable modems that are served by the other. Furthermore, CMTS 400 may be coupled to

Processor 405 controls the operation of CMTS 400 so that it behaves in accordance with the principles of the invention. For example, processor 400 may cause CMTS 400 to perform the steps of a CMTS in accordance with the method described herein in conjunction with FIG. 2. Processor 405 includes memory 407 which stores various information to support the operation of CMTS 400. In accordance with an aspect of the invention, memory 407 stores various parameters that are required for communication with a cable modem, such as those that are established during initialization, other than those cable modems that CMTS 400 is supplying cable service for, and such parameters may be supplied from memory 407. Although memory 407 is shown as being internal to processor 405, it may be external thereto as well in other embodiments of the invention.

## Claims

1. A method for use with a cable modem (109) assigned to employ a primary downstream channel, the method comprising the steps of:
storing an indication of an alternative downstream channel;
detecting that said primary downstream channel has become invalid; and
switching to employ said alternative downstream channel in lieu of said primary downstream channel whereby reinitialization of said cable modem (109) is not required.

2. The method as defined in claim 1 wherein said cable modem (109) had a particular Internet Protocol IP address, a transmit power level, and a configuration file when communicating via said primary downstream channel and wherein said cable modem (109) uses said particular Internet Protocol, IP, address, said transmit power level, and said configuration file when initially communicating via said alternative downstream channel.

3. The method as defined in claim 1 further comprising the steps of:
storing at least one parameter established during initialization of said primary downstream channel with a first cable modem terminating system, CMTS; and
transmitting said parameter by said cable modem to a second CMTS on said alternative downstream channel.

4. The method as defined in claim 3 wherein said at least one parameter is transmitted by said cable modem to said second CMTS prior to detecting in said detecting step that said primary downstream channel has become invalid.

5. The method as defined in claim 3 wherein said at least one parameter is transmitted by said cable modem to said second CMTS after to detecting in said detecting step that said primary downstream channel has become invalid.

6. A cable modem (109) assigned to employ a primary downstream channel, comprising:
means for storing an indication of an alternative downstream channel;
means for detecting that said primary downstream channel has become invalid; and
means for switching to employ said alternative downstream channel in lieu of said primary downstream channel whereby reinitialization of said cable modem is not required.

7. The cable modem as defined in claim 6 further comprising:
means for receiving via said alternative downstream channel an upstream channel descriptor; and
means for switching to use for upstream communication a frequency and modulation scheme indicated by said upstream channel descriptor.

8. The cable modem as defined in claim 6 further comprising:
means for storing, prior to said detecting step, an upstream channel identifier;
means for receiving, via said alternative downstream channel, an upstream channel descriptor; and
means for switching to use for upstream communication a frequency and modulation scheme indicated as a function of said upstream channel descriptor and said upstream channel identifier.

9. The cable modem as defined in claim 6 further comprising:
means for ranging and registering with a cable modem terminating system, CMTS, supplying said alternative downstream channel prior to detection by said means for detecting that said primary downstream channel has become invalid.

10. The cable modem as defined in claim 6 further comprising:
means for storing at least one parameter established during initialization of said primary downstream channel with a first cable modem terminating system, CMTS; and
means for transmitting said parameter by said cable modem to a second CMTS on said alternative downstream channel.

## Patentansprüche

1. Verfahren zur Verwendung mit einem Kabelmodem (109), das zugewiesen ist, einen primären Abwärtskanal zu verwenden, mit den folgenden Schritten:
Speichern einer Anzeige eines alternativen Abwärtskanals;
Erkennen, daß der primäre Abwärtskanal ungültig geworden ist; und
Umschalten, um anstelle des primären Abwärtskanals den alternativen Abwärtskanal zu verwenden, wodurch keine Neuinitialisierung des Kabelmodems (109) erforderlich ist.

2. Verfahren nach Anspruch 1, wobei das Kabelmodem (109) bei der Kommunikation über den primären Abwärtskanal eine bestimmte Adresse des Internet-Protokolls IP, einen Sendeleistungspegel und eine Konfigurationsdatei hatte und wobei das Kabelmodem (109) die bestimmte Adresse des Internetprotokolls IP, den Sendeleistungspegel und die Konfigurationsdatei bei der anfänglichen Kommunikation über den alternativen Abwärtskanal verwendet.

3. Verfahren nach Anspruch 1, weiterhin mit den folgenden Schritten:
Speichern mindestens eines während der Initialisierung des primären Abwärtskanals festgestellten Parameters in einem ersten Kabelmodem-Abschlußsystem CMTS; und
Senden des Parameters durch das Kabelmodem zu einem zweiten CMTS auf dem alternativen Abwärtskanal.

4. Verfahren nach Anspruch 3, wobei der mindestens eine Parameter durch das Kabelmodem zu dem zweiten CMTS gesendet wird, bevor in dem Erkennungsschritt erkannt wird, daß der primäre Abwärtskanal ungültig geworden ist.

5. Verfahren nach Anspruch 3, wobei der mindestens eine Parameter durch das Kabelmodem zu dem zweiten CMTS gesendet wird, nachdem in dem Erkennungsschritt erkannt wird, daß der primäre Abwärtskanal ungültig geworden ist.

6. Kabelmodem (109), das zugewiesen ist, einen primären Abwärtskanal zu verwenden, umfassend:
ein Mittel zum Speichern einer Anzeige eines alternativen Abwärtskanals;
ein Mittel zum Erkennen, daß der primäre Abwärtskanal ungültig geworden ist; und
ein Mittel zum Umschalten, um anstelle des primären Abwärtskanals den alternativen Abwärtskanal zu verwenden, wodurch keine Neuinitialisierung des Kabelmodems erforderlich ist.

7. Kabelmodem nach Anspruch 6, weiterhin umfassend:
ein Mittel zum Empfangen einer Aufwärtskanalkennung über den alternativen Abwärtskanal; und
ein Mittel zum Umschalten zur Verwendung einer Frequenz und eines Modulationsverfahrens, die durch die Aufwärtskanalkennung angegeben werden, für die Aufwärtskommunikation.

8. Kabelmodem nach Anspruch 6, weiterhin umfassend:
ein Mittel zum Speichern, vor dem Erkennungsschritt, einer Aufwärtskanalkennung;
ein Mittel zum Empfangen einer Aufwärtskanalkennung über den alternativen Abwärtskanal; und
ein Mittel zum Umschalten zur Verwendung einer Frequenz und eines Modulationsverfahrens, die als Funktion der Aufwärtskanalkennung und der Aufwärtskanalkennung angegeben werden, für die Aufwärtskommunikation.

9. Kabelmodem nach Anspruch 6, weiterhin umfassend:
ein Mittel zur Bereichswahl und Registrierung bei einem Kabelmodem-Abschlußsystem CMTS, zum Bereitstellen des alternativen Abwärtskanals vor der Erkennung durch das Mittel zum Erkennen, daß der primäre Abwärtskanal ungültig geworden ist.

10. Kabelmodem nach Anspruch 6, weiterhin umfassend:
ein Mittel zum Speichern mindestens eines während der Initialisierung des primären Abwärtskanals festgestellten Parameters in einem ersten Kabelmodem-Abschlußsystem CMTS; und
ein Mittel zum Senden des Parameters durch das Kabelmodem zu einem zweiten CMTS auf dem alternativen Abwärtskanal.

## Revendications

1. Procédé destiné à être utilisé avec un modem câble (109) affecté à une voie descendante primaire, le procédé comprenant les étapes de :
mémorisation d'une indication d'une voie descendante de remplacement ;
détection que la voie descendante primaire est devenue non valide ;
commutation pour employer ladite voie descendante de remplacement au lieu de ladite voie descendante primaire si bien que la réinitialisation dudit modem câble (109) n'est pas nécessaire.

2. Procédé selon la revendication 1, dans lequel ledit modem câble (109) avait une adresse de Protocole Internet IP particulière, un niveau de puissance de transmission, et un fichier de configuration lors de la communication avec ladite voie descendante primaire, et dans lequel ledit modem câble (109) utilise ladite adresse de Protocole Internet IP particulière, ledit niveau de puissance de transmission, et ledit fichier de configuration lors de la communication initiale avec ladite voie descendante de remplacement.

3. Procédé selon la revendication 1, comprenant en outre les étapes de :
mémorisation d'au moins un paramètre établi durant l'initialisation de ladite voie descendante primaire avec un premier système de terminaison de modem câble (CMTS) ; et
transmission dudit paramètre par ledit modem câble à un deuxième CMTS sur ladite voie descendante de remplacement.

4. Procédé selon la revendication 3, dans lequel ledit au moins un paramètre est transmis par ledit modem câble audit deuxième CMTS avant la détection dans ladite étape de détection que ladite liaison descendante primaire est devenue non valide.

5. Procédé selon 1a revendication 3, dans lequel ledit au moins un paramètre est transmis par ledit modem câble audit deuxième CMTS après la détection dans ladite étape de détection que ladite voie descendante primaire est devenue non valide.

6. Modem câble (109) affecté à une voie descendante primaire, comprenant :
un moyen pour mémoriser une indication d'une voie descendante de remplacement ;
un moyen pour détecter que ladite voie descendante primaire est devenue non valide ; et
un moyen de commutation pour employer ladite voie descendante de remplacement au lieu de ladite voie descendante primaire si bien que la réinitialisation dudit modem câble (109) n'est pas nécessaire.

7. Modem câble selon la revendication 6, comprenant en outre :
un moyen pour recevoir par l'intermédiaire de ladite voie descendante de remplacement un descripteur de voie de retour ; et
un moyen de commutation pour utiliser pour la communication de retour une fréquence et un plan de modulation indiqués par ledit descripteur de voie de retour.

8. Modem câble selon la revendication 6, comprenant en outre :
un moyen pour mémoriser, avant ladite étape de détection, un identifiant de voie de retour ;
un moyen pour recevoir, par l'intermédiaire de ladite voie descendante de remplacement, un descripteur de voie de retour ; et
un moyen de commutation pour utiliser pour la communication de retour une fréquence et un plan de modulation indiqués en fonction dudit descripteur de voie de retour et dudit identifiant de voie de retour.

9. Modem câble selon la revendication 6, comprenant en outre :
un moyen d'établissement de distance et d'enregistrement avec un système de terminaison de modem câble CMTS, fournissant ladite voie descendante de remplacement avant la détection par ledit moyen de détection que ladite voie descendante primaire est devenue non valide.

10. Modem câble selon la revendication 6, comprenant en outre :
un moyen pour mémoriser au moins un paramètre établi durant l'initialisation de ladite voie descendante primaire avec un premier système de terminaison de modem câble (CMTS) ; et
un moyen pour transmettre ledit paramètre par ledit modem câble à un deuxième CMTS sur ladite voie descendante de remplacement.
